# EUROPÄISCHE PATENTSCHRIFT

(11) **EP 1 230 812 B1**
(45) Veröffentlichungstag und Bekanntmachung des Hinweises auf die Patenterteilung: **21.04.2004**
(21) Anmeldenummer: 00987155.9
(22) Anmeldetag: 16.11.2000
(51) Int. Cl.: H04Q 7/22

(54) **VERFAHREN ZUR ÜBERTRAGUNG VON NACHRICHTEN IN EINEM FUNK-KOMMUNIKATIONSSYSTEM**
METHOD FOR TRANSMITTING MESSAGES IN A RADIO COMMUNICATION SYSTEM
PROCEDE DE TRANSMISSION D'INFORMATIONS DANS UN SYSTEME DE COMMUNICATION RADIO

(30) Priorität: 17.11.1999 DE 19955356
(43) Veröffentlichungstag der Anmeldung: 14.08.2002
(73) Patentinhaber: SIEMENS AKTIENGESELLSCHAFT, 80333 München (DE)
(72) Erfinder: HEFNER, Andreas, 81675 München (DE); MUCKE, Christian, 85238 Petershausen (DE); SEYFERT, Fabien, 80538 München (DE); WAGNER, Georg, 85570 Ottenhofen (DE)
(86) Internationale Anmeldenummer: PCT/DE2000/004063
(87) Internationale Veröffentlichungsnummer: WO 2001/037593

(56) Entgegenhaltungen:
- WO-A-99/16277
- GB-A- 2 324 678

## Beschreibung

Die Erfindung bezieht sich auf ein Verfahren zur Übertragung von Nachrichten unterschiedlicher Länge in periodisch sich wiederholenden Zeitabschnitten unterschiedlicher Länge in einem Funk-Kommunikationssystem, insbesondere einem Mobilfunksystem, wobei die Nachrichten auf der Übertragungsressource nach einer Zeitvielfachzugriffskomponente separiert werden, und ein derartig ausgebildetes Funk-Kommunikationssystem.

Funk-Kommunikationssysteme, wie beispielsweise das digitale Zellularsystem GSM (Global System for Mobile Communication), ohne daß die Erfindung hierauf beschränkt wäre, sind im letzten Jahrzehnt nahezu weltweit für die öffentliche Massenkommunikation ausgebaut worden und erschließen neben den eigentlichen Basisdiensten, den Träger- oder Bearerdiensten, sich fortwährend erweiterte Anwendungsgebiete.

Als besonders dynamisch haben sich dabei die Telematikdienste erwiesen, die unter Nutzung der Trägerdienste Nachrichten höherschichtiger Protokolle übertragen. Die wichtigsten Kategorien der Telematikdienste sind Sprache, Kurznachrichtendienste, Zugang zu Message Handling-Systemen, zum Bildschirmtext-System sowie die Teletext- und Faxübertragung.

Eine Variante der mit hoher Priorität eingeführten Kurznachrichtendienste (Short Message Services SMS) ist der Zellenrundfunkdienst Cell Broadcast Service (Short Message Service Cell Broadcast SMSCB). SMSCB-Nachrichten werden in einem begrenzten regionalen Teil (Basis Station Area bzw. Cell Broadcast Area) eines Funk-Kommunikationsnetzes in der Abwärts-Strecke (Downlink) von einer Basisstation zu mehreren sich dort aufhaltenden Teilnehmerstationen (Mobilstationen) ausgestrahlt. Die Nachrichten sind von den Teilnehmerstationen nur im Ruhezustand (Idle-Mode) zu empfangen und der Empfang wird dem Dienstzentrum (Service Center) des Zellenrundfunkdienstes nicht quittiert. Ein Anwendungsfeld der SMSCB-Nachrichten ist beispielsweise die Verkehrstelematik, wo die Datenkommunikation gute Dienste zur Übermittlung von verkehrsbezogenen Nachrichten leistet, wie Berichte zur Straßenverkehrslage oder zu Parkmöglichkeiten. Eine anderes Anwendungsfeld betrifft beispielsweise Wetterberichte. Beim Zellenrundfunkdienst erhalten die Nachrichten entsprechend ihrer Kategorie eine eindeutige Kennzeichnung, die es einer Teilnehmerstation ermöglicht, anhand des Nachrichten-Identifizierers gezielt nur die sie interessierenden Kategorien von Nachrichten zu empfangen und auf ihrem SIM-Modul zu speichern. Im GSM beträgt die maximale Länge einer SMSCB-Nachricht 93 alphanumerische Zeichen. SMSCB-Nachrichten bis zur 15-fachen Länge lassen sich mit einem speziellen Verkettungsmechanismus übertragen.

Auf der Luftschnittstelle zwischen einer Basisstation und ihren Teilnehmerstationen werden die SMSCB-Nachrichten zyklisch auf einer hierfür genutzten Signalisierungsressource, dem Cell Broadcast Channel CBCH, mit einer bestimmten Periodizität und für eine vom Provider bestimmten Dauer übertragen. Die Periodizität, mit der die SMSCB-Nachrichten aktualisiert werden, ist vom Inhalt abhängig. Zum Beispiel ist es wahrscheinlich, daß dynamische Nachrichten, wie zur aktuellen Verkehrslage in einem Gebiet, eine häufigere Übertragung erfordern als Berichte zur Wetterlage.

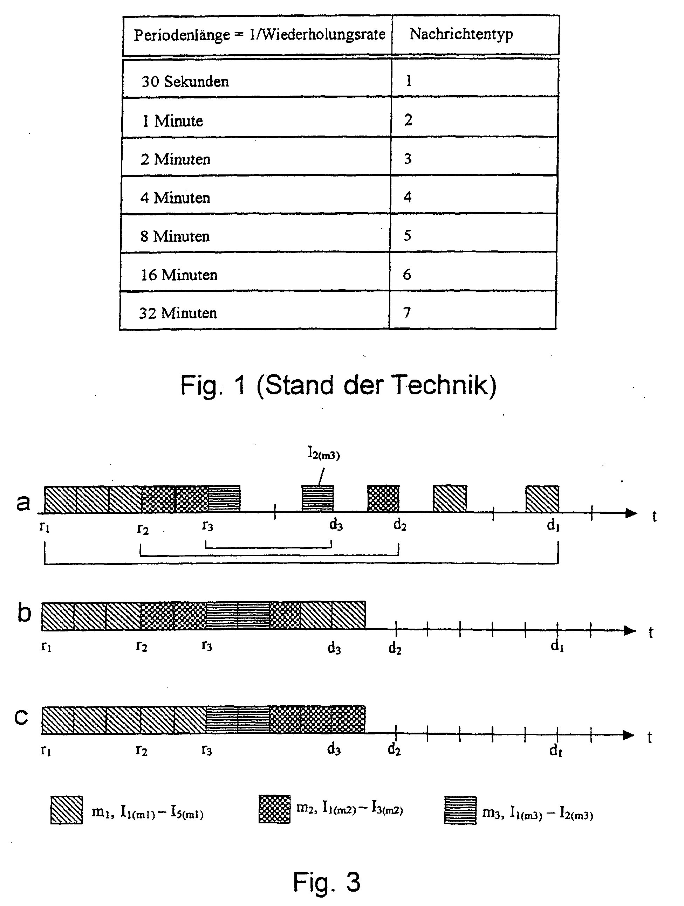

Hierzu ist es bekannt, einen begrenzten Satz von Perioden zu nutzen, um das Problem der Aufteilung in verschiedene Übertragungszyklen zu lösen. Die Perioden sind so gewählt, daß jede Periode die nächsthöhere Periode teilt. In Fig. 1 ist hierzu eine Tabelle beispielhaft dargestellt, nach der Nachrichten entsprechend ihres Typs periodisch mit Periodenlängen von 30 Sekunden bis 32 Minuten wiederholt werden.

Wegen der stark steigenden Nutzung der Zellenrundfunkdienste ist abzusehen, daß zukünftig die begrenzte Anzahl der nutzbaren Perioden nicht ausreichen wird. Wenn Wiederholungsraten in ungünstiger Weise gewählt werden, die Wahl ist dem Operator des der Zellenrundfunkstation CBC (Cell Broadcast Center) überlassen, ist die periodische Wiederholung der Nachrichten mit der gegenwärtigen Verfahrensweise in absehbarer Zeit nicht mehr garantiert. Das bedeutet auch, daß es schwer für die Zellenrundfunkstation ist, das Ende einer NachrichtenÜbertragung in der Basisstationssteuerung BSC, die für die Steuerung mehrerer Basisstationen verantwortlich ist, abzuschätzen.

WO 99 16277 A2 beschreibt eine Mehrheit (Multitask)-Transmission zu einer ausgewählten Gruppe von Mobilstationen, wobei die Signalisierung im Netzwerk minimiert wird. Verfahren zur zeitlichen Optimierung der Nachrichtenübertragung bzw. zur Festlegung einer Übertragungspriorität werden in diesem Dokument nicht beschrieben.

GB 2 324 678 beschreibt ein Verfahren zur Steuerung des zeitlichen Ablaufs der Transmission in Zellen in einem Kommunikationsnetzwerk. Es wird ein "earliest deadline first (EDF)" Verfahren beschrieben, das sicherstellt, dass die Verbindung oder Datenstrom mit dem frühesten Zeitpunkt, zu dem der Datenstrom spätestens übertragen sein muss, zuerst übertragen wird.

Der Erfindung liegt deshalb die Aufgabe zugrunde, ein Verfahren für ein Funk-Kommunikationssystem und ein auf diesem Verfahren beruhendes Funk-Kommunikationssystem zu entwickeln, das eine bessere Auslastung der Ressourcen für Telematikdienste, insbesondere SMSCB-Nachrichten, ermöglicht.

Die.Aufgabe wird erfindungsgemäß durch die in den Ansprüchen 1 und 7 angegebenen Merkmale gelöst. Vorteilhafte Weiterbildungen der Erfindung geben die begleitenden Ansprüche an.

Mit der Erfindung wird es möglich, die Übertragungsressource für Nachrichten in ihrer gesamten Bandbreite zu nutzen. Es wird eine lückenlose Nachrichtenübertragung innerhalb eines vorgegebenen Zeitintervalls realisiert, wobei die technische Umsetzung des Verfahrens vergleichsweise einfach bleibt. Auch kann von der Zellenrundfunkstation die Wiederholungsrate für die Sendung einer Nachricht willkürlich gewählt werden, das heißt, unabhängig von Teilerlängen, die beispielsweise aus einer fortgesetzten Halbierung einer maximalen Periodenlänge entstanden sind. Der vorgeschlagene Algorithmus ist sehr effizient. Anläßlich einer Beispielberechnung ergab sich, daß die Datenverarbeitung eines 48-Stunden-Zeitplanes nach einem modifizierten Horn schen Algorithmus für 6 Nachrichten weni ger als 0,1 CPU Sekunden auf einem 350 MHz Pentium® PC dauert.

Anhand eines Ausführungsbeispiels soll die Erfindung näher erläutert werden. In der zugehörigen Zeichnung zeigen:
Fig. 1 die schon erwähnte Tabelle mit einem Satz von Perioden,
Fig. 2 ein Mobilfunksystem,
Fig. 3a eine Aufteilung von drei Nachrichten auf der Zeitachse nach dem bisherigen Verfahren,
Fig. 3b zeigt die Aufteilung der Nachrichten auf der Zeitachse unter Verwendung des Horn schen Algotithmus,
Fig. 3c die Aufteilung der Nachrichten auf der Zeitachse unter Verwendung eines modifizierten Horn'schen Algorithmus, welche für jede Nachricht testet, ob deren Seiten ohne Splitten gesendet werden können.
Fig. 4 eine Aufteilung von 10 Nachrichten, die durch den erweiterten Horn'schen Algorithmus für eine periodisch zu wiederholende Übertragung mit willkürlich gewählter Periodenlänge berechnet worden ist.

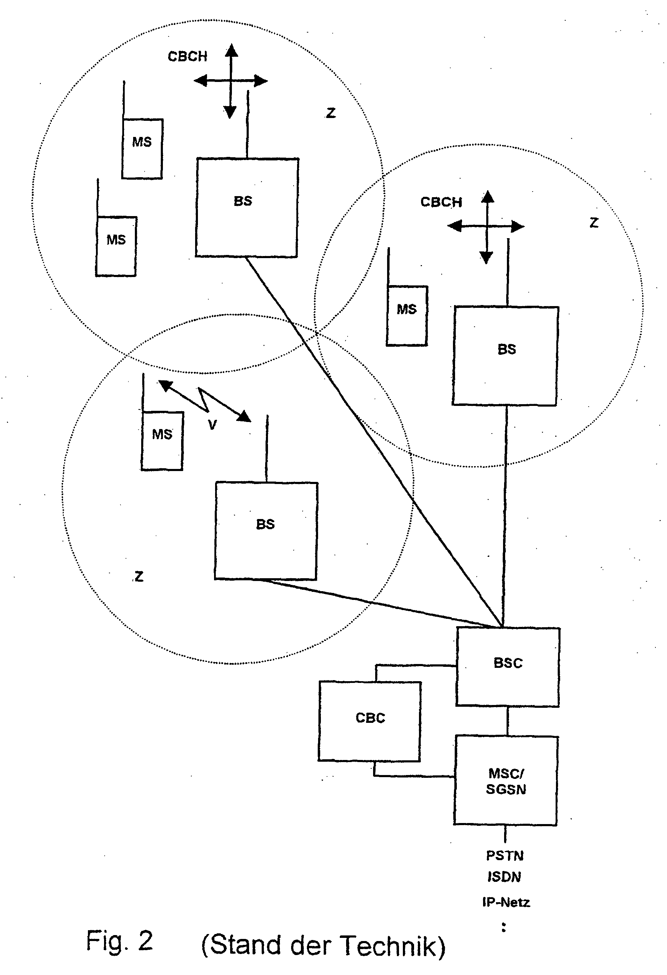

Ein Mobilfunksystem nach Fig. 2, das als Beispiel für ein Funk-Kommunikationssystem dienen soll, besteht aus Mobilvermittlungseinrichtungen MSC, die untereinander vernetzt sind und den Zugang zu Festnetzen, wie PSTN, ISDN und IP herstellen, und von denen lediglich eine dargestellt ist. Sie sind jeweils zumindest mit einer Basisstationssteuerung BSC zum Verteilen funktechnischer Übertragungsressourcen verbunden, an die unter anderem auch die Dienstzentren für die Kurznachrichtendienste, wie Zellenrundfunkstationen CBC, direkt oder über die Mobilvermittlungseinrichtung MSC angeschlossen sind.

Jede Basisstationssteuerung BSC ermöglicht eine Verbindung zu einer oder mehreren Basisstationen BS. Jede Basisstation BS kann wiederum über die Luftschnittstelle eine Verbindung zu Teilnehmerstationen MS, beispielsweise Mobilstationen, aufbauen. Durch jede Basisstation BS wird zumindest eine Funkzelle Z gebildet, die mit anderen Funkzellen Z zu einer logischen Gruppe von Funkzellen innerhalb des zellularen Mobilfunksystems zusammengefaßt ist. Bei einer Sektorierung oder hierarchischen Zellstrukturen werden je Basisstation BS auch mehrere Funkzellen Z versorgt. In einer Zelle Z ist schematisch eine bidirektionale Punkt-zu-Punkt-Verbindung V für ein Gespäch oder eine Datenübertragung vermittels eines Trägerdienstes dargestellt. Weitere Teilnehmerstationen MS sollen sich im Ruhezustand (Idle Mode) befinden. Sie sind in diesem Zustand in der Lage, Nachrichten eines Zellenrundfunkdienstes über einen "eigenen" unidirektionalen Punkt-zu-Mehrpunkt-Kanal, dem Cell Broadcast Channel CBCH, zu empfangen.

Aufgrund der stark anwachsenden Teilnehmeranschlußzahlen in Funk-Kommunikationssystemen und einer steigenden Beliebtheit bei der Nutzung von Nachrichtendiensten steht die Aufgabe, die Ressourcen dieses oder eines adäquaten Übertragungskanals zu optimieren.

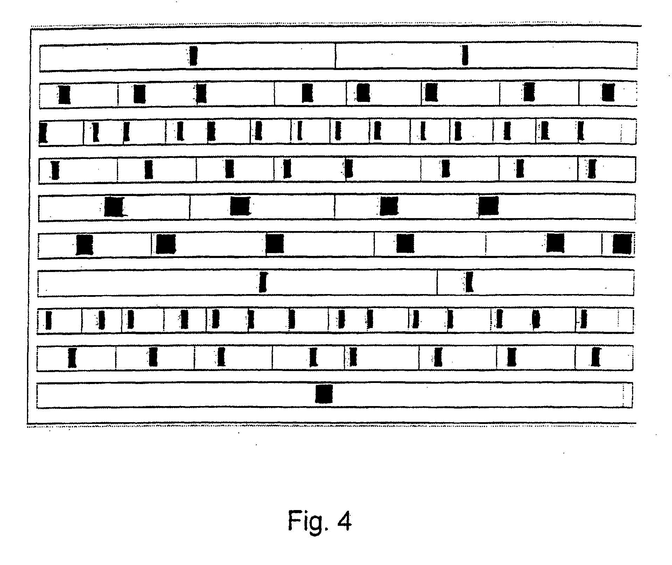

Anhand der Blockdiagramme in Fig. 3 soll nachfolgend das zu lösende Problem formalisiert werden. Es sei eine einzelne Übertragungsressource CBCH sowie ein Satz von Nachrichten m₁ bis m₃ angenommen, wobei der i-te Satz I Seiten und einen Übertragungsbeginn rᵢ und einen Zeitpunkt (deadline time) dᵢ besitzt, bis zu welchem die Übertragung entsprechend des zu übertragenden Nachrichtentyps spätestens beendet sein muß. Alle Seiten I sollen innerhalb eines vorgegebenen Zeitintervalls rᵢ≤t<dᵢ lückenlos übertragen werden. Nach einer weiteren Forderung sollen die Seiten I einer vorgegebenen Nachricht m außerdem zusammenhängend gesendet werden können. Aufgrund der Beschränkung auf lediglich eine Übertragungsressource kann höchstens eine Seite I zu einer Zeit gesendet werden. Das Problem besteht darin, entweder effizient einen Zeitplan zum Senden der Nachricht zu finden oder zu entscheiden, daß es keinen gibt.

Zur Lösung des Problems wird ein Algorithmus eingesetzt, der erstmalig durch Horn vorgeschlagen wurde (Horn W. A.: Some simple scheduling algorithms. Naval Research Logist. Quaterly 21, pp. 177-185, 1974). Danach wird eine Nachricht mᵢ als aktiv angenommen, wenn rᵢ≤tᵢ<dᵢ ist und noch mindestens eine Seite I gesendet werden muß. Die Seiten I sind in Fig. 3 als Datenblöcke dargestellt. Aus den Zeitintervallen (rᵢ, dᵢ) bestimmt der Algorithmus unter allen aktiven Nachrichten m diejenige Nachricht mᵢ mit dem nächstliegenden Zeitpunkt dᵢ, zu welchem die Nachricht mᵢ spätestens gesendet sein muß und sendet die nächste Seite Iⱼ₍ₘᵢ₎, dieser Nachricht. Gemäß Fig. 3 wäre dies beispielsweise die Seite I₂₍ₘ₃₎ der Nachricht m₆. Der Algorithmus wiederholt diesen Schritt, bis alle Nachrichten m gesendet sind. Als Ergebnis wird infolge der aneinander anschließenden Seiten I eines Satzes von Nachrichten (m₁ bis m₃₎ eine erhebliche Reduzierung der Gesamtübertragungszeit innerhalb des betrachteten Zeitintervalls (r₁, d₁) sichtbar und damit die Möglichkeit, mehr als drei Nachrichten innerhalb dieses betrachteten Zeitintervalls (r₁, d₁) zu senden.

Obwohl das Splitten von Nachrichten m technisch möglich ist, möchten die Operatoren der Zellenrundfunkstationen dies für eine höhere Effizienz des Leistungsmanagements vermeiden. Deshalb wird in einer Fortbildung der Erfindung vorgeschlagen, die Anzahl von gesplitteten Nachrichten nach heuristischen Methoden zu minimieren. Im Ergebnis stellt sich eine Nachrichtenübertragung gemäß Fig. 3c dar, wonach die Seiten I der Nachrichten m₁ bis m₃ nicht nur lückenlos gestaffelt, sondern auch zusammenhängend in steter Seitenfolge übertragen werden. Die vorgeschlagene Heurstik basiert auf einer Modifikation des Horn'schen Algorithmus. Im Gegensatz zu diesem werden aber nach dem Senden einer Seite I einer Nachricht m die restlichen Seiten im Anschluß gesendet, sofern der Zeitplan dies noch zuläßt. Diese Bedingung wird durch eine Anwendung des Max-Flow Min-Cut Theorems effizient geprüft.

Fig. 4 zeigt schematisch die Aufteilung von 10 periodisch zu wiederholenden Nachrichten unterschiedlicher Länge auf Zeitabschnitte. Die Längen der Perioden, in denen Nachrichten wiederholt werden, sind frei gewählt. Erfindungsgemäß wird jede Nachricht zusammenhängend (ungesplittet) übertragen.

## Patentansprüche

1. Verfahren zur Übertragung von Nachrichten unterschiedlicher Länge in periodisch sich wiederholenden Zeitabschnitten unterschiedlicher Länge in einem Funk-Kommunikationssystem, insbesondere einem Mobilfunksystem, wobei die Nachrichten auf der Übertragungsressource nach einer Zeitvielfachzugriffskomponente separiert werden,
wobei die Bandbreite der Übertragungsressource unter Anwendung eines optimierten Algorithmus verwaltet wird,
wobei unter allen aktiven Nachrichten (m) jeweils diejenige Nachricht (mᵢ) mit dem nächstliegenden Zeitpunkt (deadlinetime dᵢ), zu dem die Nachricht (mᵢ) spätestens übertragen sein muß, mit höchster Priorität übertragen wird,
**dadurch gekennzeichnet,**
**daß** zusätzlich zur Festlegung der Ubertragungspriorität das Kriterium einer ungesplitteten Übertragung einer Nachricht (m) berücksichtigt wird.

2. Verfahren nach Anspruch 1,
**dadurch gekennzeichnet,**
**daß** die lückenvermeidende Übertragung der Seiten (I) einer Nachricht (m) effizient mit Hilfe des Max-Flow Min-Cut Theorems realisiert wird.

3. Verfahren nach einem der vorstehenden Ansprüche,
**dadurch gekennzeichnet,**
**daß** als Übertragungsressource ein unidirektionaler Ein-zu-Mehrpunkt-Kanal dient.

4. Verfahren nach Anspruch 3,
**dadurch gekennzeichnet,**
**daß** als Übertragungsressource der Cell Broadcast Channel (CBCH) dient.

5. verfahren nach einem der vorstehenden Ansprüche,
**dadurch gekennzeichnet,**
**daß** die Nachrichten Nachrichten eines Telematikdienstes sind.

6. Verfahren nach Anspruch 5,
**dadurch gekennzeichnet,**
**daß** die Nachrichten Short Message Service Cell Broadcast (SMSCB)-Nachrichten sind.

7. Funkkommunikationssystem zur Übertragung von Nachrichten unterschiedlicher Länge in periodisch sich wiederholenden Zeitabschnitten unterschiedlicher Länge, insbesondere Mobilfunksystem, wobei die Nachrichten auf der Übertragungsressource nach einer Zeitvielfachzugriffskomponente separiert werden und wobei in einer Zellenrundfunkstation CBC ein Algorithmus implementiert ist, der unter allen aktiven Nachrichten (m) jeweils diejenige Nachricht (mᵢ) mit dem nächstliegenden Zeitpunkt (deadlinetime dᵢ), zu dem die Nachricht (mᵢ) spätestens gesendet sein muß, für eine Übertragung mit höchster Priorität aussucht,
**dadurch gekennzeichnet,**
**daß** zusätzlich zur Festlegung der Übertragungspriorität das Kriterium einer ungesplitteten Übertragung einer Nachricht (m) berücksichtigt ist.

8. Funk-Kommunikationssystem nach einem der vorstehenden Ansprüche,
**gekennzeichnet durch**
die Anwendung innerhalb des Systems GSM (Global system for mobile Communication).

## Claims

1. Method for transmitting messages of different length in periodically recurring intervals of different length in a radio communication system, especially a mobile radio communication system, in which the messages are separated on the transmission resource according to a time division multiplex component,
in which the bandwidth of the transmission resource is managed using an optimized algorithm,
in which, from all active messages (m), in each case the message (mᵢ) with the next deadline time (dᵢ) at which the message (mᵢ) must be transmitted at the latest is transmitted with the highest priority,
**characterized in that** in addition to determining the transmission priority, the criterion of an unsplit transmission of a message (m) is taken into account.

2. Method according to Claim 1, **characterized in that** the gap-avoiding transmission of the pages (I) of a message (m) is efficiently realized with the aid of the max-flow min-cut theorem.

3. Method according to one of the preceding claims, **characterized in that** a unidirectional point-to-multipoint channel serves as transmission

4. Method according to Claim 3, **characterized in that** the cell broadcast channel (CBCH) serves as transmission resource.

5. Method according to one of the preceding claims, **characterized in that** the messages are messages of a telematics service.

6. Method according to Claim 5, **characterized in that** the messages are short message service cell broadcast (SMSCB) messages.

7. Radio communication system for transmitting messages of different length in periodically recurring intervals of different length, especially a mobile radio communication system, in which the messages are separated on the transmission resource according to a time division multiplex component, and in which there is implemented in a cell broadcast centre CBC an algorithm which, from all active messages (m), in each case picks out the message (mᵢ) with the next deadline time (dᵢ) at which the message (mᵢ) must be transmitted at the latest for a transmission with the highest priority, **characterized in that** in addition to determining the transmission priority, the criterion of an unsplit transmission of a message (m) is taken into account.

8. Radio communication system according to one of the preceding claims, **characterized by** use within the GSM system (Global System for Mobile Communication).

## Revendications

1. Procédé de transmission de messages de longueur différente dans des intervalles de temps de longueur différente se répétant périodiquement dans un système de communication radio, et plus particulièrement dans un système radio mobile, les messages étant séparés sur la ressource de transmission selon une composante AMRT (accès multiple à répartition dans le temps),
la largeur de bande de la ressource de transmission étant gérée moyennant l'application d'un algorithme optimisé,
le message (mᵢ) avec l'échéance la plus proche (deadline time dᵢ) à laquelle ledit message (mᵢ) doit être transmis au plus tard étant transmis avec la plus haute priorité parmi tous les messages (m) actifs,
**caractérisé par**
la prise en compte, en plus de la détermination de la priorité de transmission, du critère d'une transmission non fragmentée d'un message (m).

2. Procédé selon la revendication 1, **caractérisé en ce que** la transmission des pages (I) d'un message (m) évitant des lacunes est réalisée de manière efficiente à l'aide du théorème du flux maximum et de la coupe minimum (Max-Flow Min-Cut).

3. Procédé selon l'une des revendications précédentes, **caractérisé en ce qu'**un canal unidirectionnel de point à multipoint sert de ressource de transmission.

4. Procédé selon la revendication 3, **caractérisé en ce que** le canal «Cell Broadcast Channel» (CBCH) sert de ressource de transmission.

5. Procédé selon l'une des revendications précédentes, **caractérisé en ce que** les messages sont des messages d'un service télématique.

6. Procédé selon la revendication 5, **caractérisé en ce que** les messages sont des messages «Short Message Service Cell Broadcast» (SMSCB).

7. Système de communication radio pour la transmission de messages de longueur différente dans des intervalles de temps de longueur différente se répétant périodiquement, plus particulièrement dans un système radio mobile, les messages étant séparés sur la ressource de transmission selon une composante AMRT (accès multiple à répartition dans le temps) et un algorithme étant implémenté dans une station radio cellulaire CBC, lequel sélectionne respectivement, parmi tous les messages (m) actifs et pour une transmission avec la plus haute priorité, le message (mᵢ) avec l'échéance la plus proche (deadline time dᵢ) à laquelle ledit message (mᵢ) doit être transmis au plus tard, **caractérisé par** la prise en compte, en plus de la détermination de la priorité de transmission, du critère d'une transmission non fragmentée d'un message (m).

8. Système de communication radio selon l'une des revendications précédentes, **caractérisé par** l'application dans le système GSM (Global System for mobile Communication).
